# EUROPEAN PATENT APPLICATION

(11) **EP 2 030 696 A1**
(43) Date of publication of application: **04.03.2009**
(21) Application number: 08015013.9
(22) Date of filing: 26.08.2008
(51) Int. Cl.: B05B 15/12

(54) **Automatic painting plant for products of various kind**

(30) Priority: 31.08.2007 IT PN20070063
(71) Applicant: Vidali Impianti S.R.L., 31045 Motta di Livenza (TV) (IT)
(72) Inventor: Vidali, Giulio, 31040 Chiarano (TV) (IT)
(74) Representative: Dalla Rosa, Adriano

(57) **Abstract**

Automatic painting plant for metallic products, products made of wood, plastic etc.. of various kind, such as for example wooden window and door frames and furniture elements, metallic parts of various kind etc.. Plant comprising a slidable front gate (12) for the access to the painting cab, at least a guns-carrying arm (13) extended in the horizontal direction almost for the entire length of said cab (11), which is supported into a respective fixed vertical column (14, 15), which are situated on the sides of the same cab, said guns-carrying arm (13) being provided with spray guns (14') and being driven in an alternate vertical direction by powered driving mechanisms (16) of per se known type, installed into said fixed columns (14, 15), from a lowered to a raised position, and vice versa, by passing through different intermediate positions. Plant comprising also a L-shaped movable band (18) slidable in the interior of said cab (11), for collecting the paint dispersed into the cab and also comprising removal and collecting means (33) of the dispersed paint deposited on to the movable band (18) and an air intake collector (34), situated above the movement inversion zone of the movable band (18), in order to suck outer air and produce an air flow through the cab inside, by passing through some filters (35) housed into a support container (36) installed at the level of the floor outside the cab (11).

## Description

The invention relates to an automatic painting plant for industrial applications, for painting metallic products, products made of wood, plastic etc.. of various kind, adapted to paint such products in a quick and continuous manner, with an effective suction and a complete collection of the atomized paint during each painting step, without undesired deposits of paint wastes.

Painting plants for industrial applications for painting products of the kinds referred to are known, each one of which comprising substantially a painting cab closed outwards by movable doors, which are accessible by the personnel, where a paint spraying system is installed, which system is composed of a horizontal reciprocating arm slidable vertically and alternately along a fixed vertical tower, mounted on the cab front and central part, which arm is provided with a set of spray guns of swinging type, connected to the paint reservoirs through a set of pumps and valves and related conveying conduits and control circuits, such cab being crossed by a conveying system with continuous advancing in a horizontal direction, supporting the different products to be treated, which is slidable in front of the reciprocating arm, so as the atomized paint sprayed by the guns is directed against the products to be treated, with consequent painting thereof, as well as in front of a movable vertical band with continuous advancing, situated on the cab rear part, on the front portion of which a part of the dispersed atomized paint not applied on to the products is collected in a continuous manner, which dispersed paint has a speed sufficient to arrive on the same band front portion, and on the rear portion of which a device for removing the paint from the band and for collecting the same paint is situated, in a manner to recover such dispersed paint, thereby keeping such movable vertical band under such conditions as to guarantee that additional dispersed atomized paint may be collected.

Such kind of plants are further provided with two air suction vertical conduits, mounted in the two sides of the movable band and also contained in the interior of the painting cab, which are associated with correspondent outer air suction units, adapted to generate air flows inside the cab, in order to disperse the atomized paint not applied on to the products and a part of the paint collected by the movable vertical band, by conveying air and the same paint towards suitable filters, situated in the sides of the movable vertical band, where air is purified and discharged on the ambient outside the cab, while the paint is kept and subsequently collected, and the filters are cleaned periodically from the paint, or are replaced, in order to guarantee that additional dispersed paints may be filtered. However, the plants of this kind have some drawbacks which do not allow them to operate with safety and reliability on the time. In fact, at first the presence of the movable vertical band allows to recover only a part of atomized paint and not all the same paint, as it would be on the contrary desirable, so that the part of atomized paint which isn't collected by the movable vertical band and not kept by the filters falls by gravity on the painting cab floor, and on the time tends to accumulate and to stick itself on to the same floor, by forming in a relatively short time a thick and dense layer of paint, the removal of which is difficult, with consequent difficult and less practical access into the cab of the personnel devoted to the maintenance of the spraying system, who must necessarily work in a dangerous ambient and trample on to such paint layer, by making himself dirty, for performing the maintenance works. Moreover, the plants of this kind need a continuous maintenance almost every day of their different component parts, so as to guarantee a continuous operation of the same plant, which maintenance must be effected, in addition to the spraying system, also to the device for removing the paint from the movable vertical band, and the relative collecting device of such dispersed paint, and is absolutely indispensable for keeping the plant on an efficient operative condition, in that in the case in which the maintenance would be deficient or absent the movable vertical band would become encrusted with dispersed paint and would be not more able to collect additional dispersed paint, with consequent rapid degradation thereof and need to be replaced. Furthermore, such maintenance relates also to the purification filters, which must kept and filter every day considerable quantities of dispersed atomized paint and therefore tend to become clogged rapidly, and often must be replaced after relatively short working periods, with consequent high labour burdens for maintaining and the replacing the clogged filters and buying and installing new filters. Another drawback of these painting plants consists in that the reciprocating arm is mounted on the cab front and central part, in such a position as it does not allow any possible further collecting means for the dispersed paint capable of collecting another part of the dispersed atomized paint to be mounted therein, so as to reduce the quantity of paint falling onto the cab floor and the consequent maintenance difficulties deriving from the presence of the paint layer accumulated onto the same floor. Besides, on this mounting position of the reciprocating arm, and of the fixed vertical tower supporting the same arm, the dispersed atomized paint tends to fall partially also on to the central support tower, by depositing it progressively and mainly on to the base of the same tower, and therefore requiring a periodical maintenance even of such tower, for removing the accumulated paint layer, with consequent need to effect additional maintenance interventions and relative cost burdens.

The object of the present invention is to realize a new and original type of automatic painting plant for products of various kind, in which the above described drawbacks and operative limits of the present plants are eliminated, and in which this new plant is realized in such a manner as to operate in a reliable and continuous way, and to suck and collect almost completely the dispersed atomized paint, without undesired deposits of paint wastes on to the cab floor.

This plant is made with the constructive characteristics substantially described, with particular reference to the enclosed claims of the present patent.

The invention will be better understood from the following description, given by way of not-limiting example only and with reference to the accompanying drawings in which :
- Fig. 1 shows a schematic perspective front view of the cab of the painting plant according to the present invention ;
- Fig. 2 shows a schematic front view of the cab of the plant of Fig. 1 ;
- Fig. 3 shows a schematic side view of the cab of the plant of Fig. 1 ;
- Fig. 4 shows a schematic plan view of the cab of the plant of Fig. 1 ;
- Fig. 5 shows a schematic front view of some component parts of the plant of Fig. 1 ;
- Fig. 6 shows a schematic side view of the plant of Fig. 5, with additional component parts ;
- Fig. 7 shows a plan view of the plant of Fig. 5.

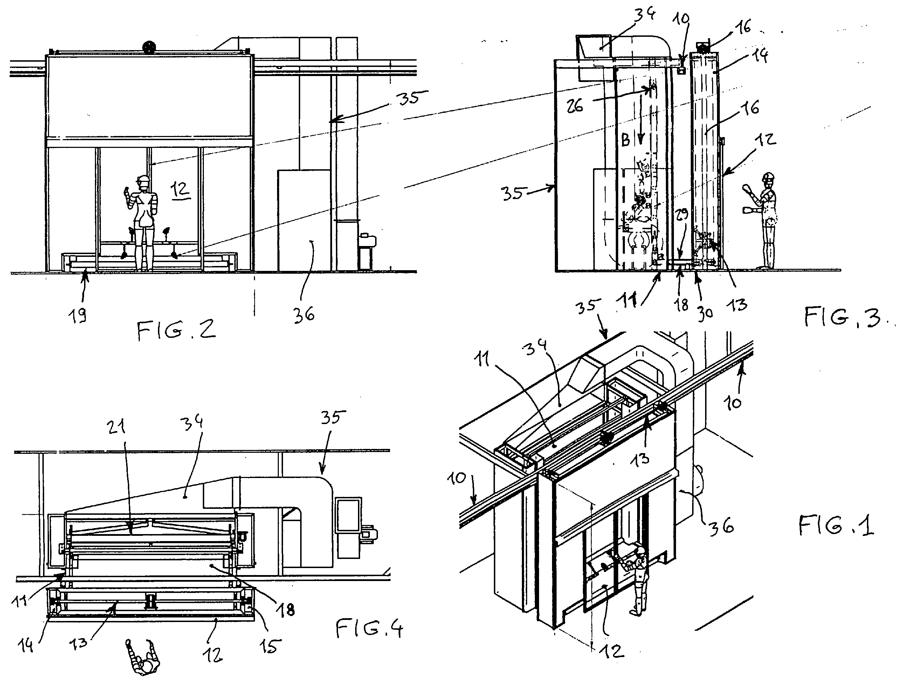

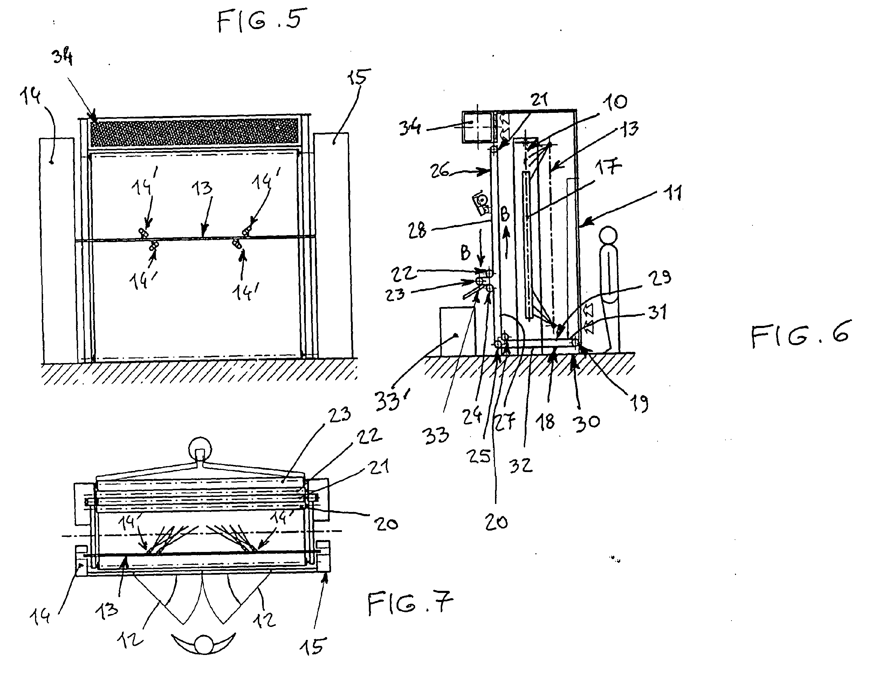

The above described Figures schematically illustrate a plant according to the invention, for painting automatically metallic products, products made of wood, plastic etc.. of various kind such as for example wooden window and door frames and furniture elements, metallic parts of various kind, etc.. which are suspended in a conventional conveying plant with continuous advancing in a horizontal direction 10, which is driven by motors and controlled by per se known control devices, which plant conveys the products through a painting cab 11 closed outwards by peripheral walls and accessible by the devoted personnel through a slidable front gate 12 (see Figs. 1 and 2), in the interior of which the different component parts of the present painting plant which will be described in detail are installed. This painting plant is substantially constituted by at least a guns-carrying arm 13 extended in the horizontal direction almost for the entire length of the cab 11, and the end portions of which are supported into a respective fixed vertical column 14 and 15 (see Figs. 1, 2, 3, 4 and 5), which are situated on the sides of the same cab and into which the powered driving means 16 of per se known type are installed, which are adapted to provide for the alternate vertical sliding of the guns-carrying arm 13, from a lowered to a raised position thereof, and vice versa, by passing through different intermediate positions. Moreover, such guns-carrying arm 13 is provided with a set of spray guns 14' of any kind, provided with nozzles for the passage and nebulization of the paint and connected to the paint reservoirs through a set of pumps and valves and relative conveying conduits and control circuits (all these components aren't shown) of traditional type, said spray guns being situated in a position opposite to that in which the products to be treated are conveyed by the relative conveying plant 10, and being oriented in such a manner as to direct the paint spraying jets against all the surfaces of each product to be treated being advanced in the sole advancing direction A of the conveying plant 10. In particular, the guns-carrying arm 13 is displaced in the alternate vertical direction by the relative powered driving means 16, from a starting lowered and not active position under the condition in which the paint spraying operation isn't effected, to different working raised positions, until the highest raised position, and from such raised positions downwards again, under the condition in which the paint spraying operation for the entire extent and on to all the surfaces of each product to be treated 17 is effected (see Fig. 6).

The painting plant referred to is also constituted by at least a L-shaped movable band 18 for collecting the paint, which is slidable in the interior of the cab 11 and is driven and guided by a set of powered horizontal rolls 19-25 with a continuous advancing in the sole advancing direction B, and is shaped with a rectilinear vertical portion 26, situated in the rear part of the cab 11, behind the products to be treated 17 being conveyed by the relative conveyor plant 10, and which extends for a height greater than that of the same products, said portion being formed by a vertical front part 27 and a vertical rear part 28, said band being also shaped with a horizontal portion 29 situated in a position slightly raised with respect to the lower horizontal floor 30 of the cab 11, and arranged in a position below both the conveying plant 10 and the relative products to be treated 17 and also the guns-carrying arm 13, and which extends for the entire depth of the same cab, said portion being formed by an upper horizontal part 31 and a lower horizontal part 32. In this way, when the paint is sprayed on to the products to be treated, the part of the dispersed atomized paint not applied on to the same products deposits and collects itself on to both the outer surface of the vertical front part 27 and the outer surface of the upper horizontal part 31 of the movable band 18, and is conveyed in a continuous manner by the advancing of the same movable band in the direction B.

When all the paint collected on to both the band parts 27 and 31 arrives in the vertical rear part 28 of the same band, it is detached at first from the outer surface of said band by means of a suitable paint removal and collecting device, such as for example a scraper-collector 33 arranged into contact with such outer surface and mounted in the band lower portion, near the advancing and guiding rolls 22-24 of the same band, and the so detached paint is collected on to a container 33' arranged below it, for being re-used. In this case, the installation of the L-shaped movable band 18 is made possible by the fact that the guns-carrying arm of the spraying system is supported in a different manner, by eliminating the vertical fixed central tower of the present painting plants and mounting the two fixed vertical columns 14 and 15 for supporting and moving the same arm in a position spaced away from each other, in which the horizontal portion 29 of the movable band 18 is installed. Moreover, the presence of the movable band allows to collect effectively all the dispersed paint not applied on to the products, without the same falls on to the cab floor, thereby preventing to form paint layers on to the floor of the same cab, as it occurs in the present painting plants, and avoiding that the devoted personnel gets dirty by trampling on to such paint layers and works in a dangerous ambient. Besides, also the maintenance of the plant is simplified, in that it is now possible the access to the interior of the cab 11 through the front gate 12 for acting on the spraying system, so as to arrive directly from the outside to such spraying system, without entering the cab interior and trampling on to the upper horizontal part 31 of the movable band 18, thereby avoiding to get dirty with the dispersed paint collected on to the same part.

In turn, thanks to the accessibility from the outside and to the constructive simplicity of the paint removing and collecting device 33, acting as described against the vertical rear part 28 of the movable band 18, it is possible to effect in a simple and rapid manner the maintenance each day of this device, thereby eliminating to form some incrustations on the band, and therefore any possibility of damages and degradations and need of replacing the same band.

The present painting plant is also constituted by an air intake collector 34, situated above the movement inversion zone of the rectilinear vertical portion 26 of the movable band 18, and extended for the entire length of the painting cab, into which the suction unit is mounted, and the air inlet is provided by openings (not shown) situated on the painting cab lower part, and positioned behind the spraying system, and provided by cab side slits, positioned in the inlet and outlet area of the pieces to be painted, in order to allow the conveying plant with the relative products to be treated to pass therethrough, and in this manner air entering the cab is circulated from the bottom upwards, and from the outside inwards, and is then sucked by the upper collector 34, so as to convey the dispersed paint not applied to the products toward the central zone of the movable band 18, with consequent recovery through the same movable band of almost all the quantity of such dispersed paint. Finally, the plant referred to is also constituted by a filtering system 35, the filters of which of traditional type aren't housed in the cab upper part, where the intake collector 34 is situated, rather are housed into a support container 36 which can be positioned easily, and is installed at the level of the floor outside the cab, and the air flow produced in the cab is firstly deviated through the same cab and the intake collector 34, and then let to pass through such filters. Thanks to this arrangement of the filtering system, a wide filtering surface is made available, owing to the better arrangement of the filters in the container, and the filters held a smaller quantity of dispersed paint with respect to the filters of the present painting plants, in that as previously explained such dispersed paint is collected almost completely by the movable band 18, and in a very low extent by the filters, and under this condition these filters may operate for longer time periods without requiring the maintenance or any possible replacing thereof.

Moreover, these operations are performed in a more simple and rapid manner with respect to the present known installations, by reaching at first the filtering system arranged on the floor through a door, and then by removing the clogged filters and replacing them with further cleaned filters, without the aid of stairs or particular equipment.

Besides, the dispersed paint is collected and recovered in a larger extent with respect to the recovery effected with the present painting plants. Finally, in the plant according to the invention it is also possible to associate the vacuum generated inwardly the painting cab with a suitable treatment unit of known type, for example for regulating the moisture and the temperature and reducing the presence of powder, etc.

## Claims

1. Automatic painting plant for metallic products, products made of wood, plastic, etc.. of various kind, such as for example wooden window and door frames and furniture elements, metallic parts of various kind, etc.. which are suspended in a conventional conveying plant with continuous advancing in a horizontal direction, adapted to convey such products to be treated through a painting cab closed outwards by peripheral walls and with possibility of access to the interior, and in which spraying means of the paint on the outer surfaces of the different products conveyed by said conveying plant are arranged, which means are connected with means for paint containing through control and valve means of per se known type ; collecting means of the dispersed paint not applied to the products ; means for generating an air flow through the cab interior, adapted to suck air from the outside and to let it to pass together with the dispersed paint through filtering means, where the dispersed paint is filtered and collected, for being subsequently re-used, and adapted to discharge subsequently the purified air outwards, the plant being **characterized in that** said cab (11) is accessible through a slidable front gate (12), and that said spraying means comprise at least a guns-carrying arm (13) extended in a horizontal direction almost for the entire length of said cab (11), and the end portions of which are supported into two fixed vertical columns (14, 15), which are situated on the sides of the same cab and accessible through said slidable gate (12), said guns-carrying arm (13) being driven in an alternate vertical direction by powered driving mechanisms (16) of per se known type installed into said fixed columns (14, 15), from a lowered position to a raised position, and vice versa, by passing through different intermediate positions, said guns carrying arm (13) being also provided with spray guns (14') or the like, of any kind, provided with nozzles for the passage and nebulization of the paint, and **characterized in that** said collecting means of the dispersed paint comprise at least a L-shaped movable band (18), slidable in the interior of said cab (11), which is driven and guided by a set of powered rolls (19, 25) with a continuous advancing in the sole advancing direction (B), and is shaped with a rectilinear vertical portion (26) situated in the rear part of said cab (11), behind the products to be treated (17) conveyed by said conveying plant (10), and extended for a height greater than the same products, said portion being formed by a vertical front part (27) and a vertical rear part (28) as well as a horizontal portion (29) situated in a position slightly raised with respect to the lower horizontal floor (30) of said cab (11), and arranged in a position below both said conveying plant (10) and the relative products to be treated (17) and also said guns-carrying arm (13), and extended for the entire depth of the same cab, said portion being formed by an upper horizontal part (31) and a lower horizontal part (32), and
**characterized by** removal and collecting means (33) of the dispersed paint deposited on to said vertical front part (27) and upper horizontal part (31), for detaching the paint from said movable band (18) and collecting it into container means, for being subsequently re-used ; **characterized** also in that said means for generating an air flow comprise at least an air intake collector (34), situated above the movement inversion zone of said rectilinear vertical portion of band (26) and extended for the entire length of said cab (11), and provided with at least a suction unit of traditional type, said collector being adapted to suck the outer air and to produce an air flow from the bottom upwards and from the outside inwards the cab, which is firstly deviated through the same cab and said collector (34) and then let to pass through filtering means (35), so as to purify air from the dispersed paint, and finally **characterized in that** said filtering means (35) are constituted by per se known filters, of removable and interchangeable type, housed into a support container (36) installed at the level of the floor outside said cab (11).

2. Plant according to claim 1, **characterized in that** said removal and collecting means are constituted by at least a scraper-collector (33) arranged into contact with the outer surface of said band vertical rear part (28) and mounted in the lower portion of the same band, near said advancing and guiding rolls (22-24) of the same band.

3. Plant according to claim 2, **characterized in that** air of the air flow produced by said collector (34) is sucked through openings situated in the lower part of the painting cab (11) and through vertical side slits of said cab (11), needed for the passage of said conveying plant (10) with the relative products to be treated (17).

4. Plant according to claim 3, **characterized in that** the vacuum generated inwards said painting cab (11) by the suction unit may be associated to and diffused into the cab by means of a suitable treatment unit (moisture, temperature, powder reduction) of known type.
